Europäisches Patentamt

European Patent Office

Office européen des brevets

(11) Veröffentlichungsnummer: **0 255 027**
**A2**

(12) **EUROPÄISCHE PATENTANMELDUNG**

(21) Anmeldenummer: 87110588.8

(22) Anmeldetag: 22.07.87

(51) Int. Cl.³: **B 23 P 21/00**
**B 23 Q 37/00, B 23 Q 7/14**

(30) Priorität: 30.07.86 DE 3625787

(43) Veröffentlichungstag der Anmeldung:
03.02.88 Patentblatt 88/5

(84) Benannte Vertragsstaaten:
AT CH DE ES FR GB IT LI NL SE

(71) Anmelder: Stribel GmbH
Benzstrasse
D-7443 Frickenhausen(DE)

(72) Erfinder: Stribel, Hans Peter
Ob der Luthereiche 26
D-7440 Nürtingen(DE)

(72) Erfinder: Nicklass, Joachim, Dipl.-Ing. (FH)
August-Pfänder-Strasse 36
D-7440 Nürtingen(DE)

(54) Montageeinrichtung.

(57) Die Montageeinrichtung (1) weist ein Transportsystem für Werkstückträger (4) auf, auf denen Werkstücke (49) positioniert werden, die an Arbeitsstationen (9,10,15,20) bestückt und/oder bearbeitet werden. Die Montageeinrichtung (1) weist eigenständige Arbeitsplatzeinheiten (2) auf, auf denen separate Förderer (6,8,45) für die Werkstückträger (4) vorgesehen werden können, wobei die Werkstücke (49) wahlweise sowohl auf dem vorderen als auch auf dem hinteren Längsförderer (6) bearbeitbar sind. Die Arbeitsplatzeinheiten (2) haben je einen Schaltschrank (23), in dem die Steuereinrichtungen für die Förderer (6,8,45) vorgesehen sind. Außerdem besitzt jede Arbeitsplatzeinheit (2) zur Anreihung und Verkettung mit weiteren Arbeitsplatzmodulen leicht kuppelbare Verbindungen (29) für die Versorgungs- und Steuerleitungen (26).

FIG. 1

EP 0 255 027 A2

Stribel GmbH                                    1015 EP
Benzstraße
D-7443 Frickenhausen

Beschreibung

Montageeinrichtung

Die Erfindung betrifft eine Montageeinrichtung mit den Merkmalen des Oberbegriffs des Anspruchs 1.

Für die Montage von Werkstücken sind Montagestraßen bekannt, bei denen die Werkstücke mittels Paletten, sogenannten Werkstückträgern, auf Fördermitteln, wie Transportbändern, Gurten oder Ketten, durch Reibungskraft den Bearbeitungsweg entlang transportiert werden. Die Werkstückträger können durch elektronische Steuermittel an bestimmten Stellen angehalten und über quer zur eigentlichen Transportrichtung laufende Transportbänder zu neben der Hauptförderstraße befindlichen Bearbeitungsplätzen geführt werden. Nach der Bearbeitung werden die Werkstücke dann wieder zur Hauptstraße zurückgeführt und von dieser bis zur nächsten Bearbeitungsausleitung befördert. Hierbei ist es nachteilig, daß bei einem derartigen Montage-

2

system die Gesamtlänge der Anlage von vornherein festzulegen ist. Dabei ist es besonders problematisch, wenn auf dieser Montagestraße ein Werkstück zusätzlich mitlaufen soll, das an ein oder mehreren Stellen zusätzlich zu bearbeiten ist. In einem solchen Falle muß die Gesamtlänge der Montagestraße erweitert werden. Dies erfordert aufgrund des am Anfang oder Ende der Montagestraße liegenden Gesamtantriebs eine Veränderung des Straßen-Grundgerüstes sowie der Transportbänder und unter Umständen auch der Gesamtantriebsleistung. Um solche Umbauarbeiten durchführen zu können, ist die gesamte Produktionseinrichtung stillzulegen, wobei zu den aufwendigen und kostenintensiven Änderungsarbeiten, die zum Teil auch nur im Herstellerwerk durchgeführt werden können, zusätzlich ein kostenverursachender Produktionsausfall bei der Herstellung eines oder mehrerer Produkte entsteht. Außerdem müssen nach Beendigung derartiger Umbauarbeiten alle Bearbeitungsstationen komplett und auf Anhieb funktionstüchtig sein, um den Arbeitsablauf durchführen zu können; anderenfalls muß die Gesamtanlage sofort wieder stillgelegt werden.

Ein weiterer Nachteil besteht darin, daß aufgrund der feststehenden Breite der längs und quer laufenden Förderbänder bevorzugt nur quadratische Werkstückträger zur Anwendung gelangen. Werkstückträger mit rechteckförmiger Grundfläche müssen an den Übergabestellen um 90° gedreht werden, um von dem Querförderband übernommen werden zu können. Zum Drehen der rechteckförmigen Werkstückträger sind aufwendige Drehstationen erforderlich. Wenn neue Produkte produziert werden sollen, wobei die Werkstücke auf großflächigeren Werkstückträgern zu positionieren sind, ist die gesamte Transportstraße zu verändern und es ist das Transportmittel für die größeren Werkstückträger zu verbreitern, was besonders aufwendig ist, da eine derartige Umstellung in der feststehenden Originalkonstruktion nicht berücksichtigt ist.

Die Aufgabe der Erfindung besteht darin, eine Montageeinrichtung mit den Merkmalen des Oberbegriffs des Anspruchs 1 dahingehend weiterzubilden, daß für eine Produktionsumstellung oder Ergänzung aufwendige Umbauarbeiten und Produktionsausfallzeiten weitgehend vermieden werden und mit einfachen Mitteln eine flexible, individuelle Gestaltung für sowohl neu zu erstellende als auch umzurüstende oder zu erweiternde Montageeinrichtungen erzielt wird, wobei Arbeitsvorgänge auf der Haupttransportstrecke mehrseitig und direkt ohne Ausleitung durchführbar sein sollen.

Diese Aufgabe wird erfindungsgemäß durch die kennzeichnenden Merkmale des Anspruchs 1 gelöst.

Die eigenständigen modularen Arbeitsplatzeinheiten der erfindungsgemäßen Montageeinrichtung können zu einer linearen Fertigungsstraße aneinandergereiht werden. Die einzelnen Module können dazu als Handarbeitsplatz oder als vollautomatische Bearbeitungsstation für Zuführungs-, Einsetz-, Niet-, Preß-, Stanz-, Bohrarbeiten und dergleichen ausgerüstet sein. Jede einzelne Arbeitsplatzeinheit (Modul) kann mit einfachen Mitteln leicht in die Fertigungsstraße eingefügt, angesetzt oder herausgenommen werden, wofür leicht lösbare bzw. kuppelbare mechanische Verbinder sowie Versorgungsleitungsverbindungen und Steuerleitungsverbindungen vorgesehen sein können. Die Versorgung der auf den Arbeitsplatzeinheiten anzuordnenden Arbeitsgeräte kann pneumatisch, hydraulisch oder elektrisch erfolgen.

Zur automatischen Steuerung kann es günstig sein, einen elektronischen Zentralrechner vorzusehen. Zur individuellen Steuerung der auf den Arbeitsplatzeinheiten anzuordnenden Förderer, wie vorderem und hinterem Längsförderer sowie quer dazu verlaufenden Querförderern, kann jede Arbeitsplatzeinheit einen Steuereinrichtungen beinhaltenden Schaltschrank aufweisen und es können auf den jeweiligen Arbeitsplatzeinheiten zusätzliche elektrische bzw. elektronische Steuergehäuse zur Selbststeuerung der Arbeitseinrichtungen, wie Pressen, Einsetzer, Greifer, Sortierer, Zuführer, aufgesetzt werden, die elektronische, programmierbare Steuerungen beinhalten und ebenfalls mit dem Zentralrechner verbunden sein können.

Die eigenständige Arbeitsplatzeinheit kann vorteilhaft ein Grundgestell aufweisen, auf dem eine vorzugsweise mit einem Gewindelochraster versehene Montagetischplatte angeordnet ist. Am Lochraster der Tischplatte können die verschiedenen Einzelkomponenten (Förderer, Arbeitsgeräte etc.) problemlos befestigt werden. An zwei gegenüberliegenden
Seiten der Arbeitsplatzeinheit laufen die Längsförderer, die vornehmlich zwei schmale endlose
Transportbänder aufweisen, deren Triebrollen auf
einer Seite von einem drehzahlgeregelten Motor
angetrieben werden können. Die Antriebsrollen
und Umlenkrollen können dabei auf einer angetriebenen bzw. mitlaufenden Welle vorgesehen sein,
auf der sie zur leichten und schnellen Anpassung
der Breite der Förderer an unterschiedlich große
Werkstückträger z.B. durch einfachen Klemmanzug
verstellt werden können. Damit die Werkstückträger
auf den Transportbändern gegen Verrutschen sicher
geführt werden, können seitlich neben den Transportbändern noch Längsführungen vorgesehen sein, die
ebenfalls leichtgängig justierbar sind und bei
einer Breitenänderung des Förderers nachgestellt
werden können. Dabei kann es vorteilhaft sein,
beim Verstellen der Spurweite der Längs- und Querförderer nur die Begrenzung zum Tischinneren hin
zu verändern, um die äußere Gesamtstraßenbreite
beizubehalten.

Die Schaltglieder für den Antrieb des Förderers
befinden sich vorteilhaft in dem seitlich an der
Arbeitsplatzeinheit angeordneten Schaltschrank.
Der Antrieb des Förderers kann rechnergesteuert
sowohl in der Geschwindigkeit als auch vor- und
rückwärts geschaltet und geregelt werden.

Die eigenständigen Arbeitsplatzeinheiten können an den nicht transportorientierten Stirnseiten zusammengefügt werden, und zwar so, daß die Transportbänder der Längsförderer zweier Module bzw. Arbeitsplatzeinheiten sich nicht berühren, jedoch eine einwandfreie Übergabe bzw. Übernahme der Werkstückträger gewährleisten. Die Transportrichtung der Montagestraße kann dabei so sein, daß die Förderbänder an der einen (vorderen) Seite der Arbeitsplatzeinheit in die eine (rechte) Richtung erfolgt, während die an der hinteren Seite der Arbeitsplatzeinheit vorgesehenen Förderbänder in entgegengesetzter Richtung (links) laufen. Insbesondere bei Doppelarbeitsplätzen kann es jedoch auch günstig sein, die Transportbänder des vorderen und des hinteren Längsförderers in gleicher Richtung entweder zur einen oder zur anderen Seite zu betreiben. Mit den auf dem Tisch zwischen den beiden Längsförderern vorgesehenen Arbeitsgeräten können sowohl die auf dem vorderen Längsförderer als auch die auf dem hinteren Längsförderer transportierten Werkstücke wahlweise bearbeitet werden, so daß bei geringem Arbeitsplatzbedarf (Doppelarbeitsplatz) eine große Produktionsdichte mit hohem Wirkungsgrad erreicht werden kann.

Am vorderen und hinteren bzw. unteren und oberen Ende der linearen Montagestraße können die Arbeitsplatzeinheiten mit zur Straßenlängsrichtung quer verlaufenden Transporteinrichtungen (Querförderern) ausgestattet sein, um die Werkstückträger mit den darauf positionierten Werkstücken auf den anderen (hinteren) Längsförderer umzuleiten. Derartige Umleitvorrichtungen bzw. Querförderer können grundsätzlich auf jeder Arbeitsplatzeinheit vorgesehen werden, um z.B. einen Teil der Gesamtmontagestrecke auszusparen, abzukürzen oder zu umgehen. Aus Kostengründen werden Umleitungen zweckmäßig jedoch nur an den Arbeitsplatzeinheiten, wie z.B. Doppelarbeitsplätzen, angebracht, wo sie tatsächlich gebraucht werden, um eine Umgehung oder eine Umleitung eines Arbeitsplatzes zu erreichen. Am Lochraster des Arbeitsplatztisches kann zudem das die pogrammierbare Steuerschaltung beinhaltende Steuergehäuse für die Arbeitsgeräte über einen bevorzugt rohrförmigen Ständer befestigt werden. Dabei kann es vorteilhaft sein, auf einem der Endmodule (vordere oder hintere Arbeitsplatzeinheit) ein weiteres Gehäuse zur Aufnahme des Zentralrechners anzubringen. Die Arbeitsplatzeinheiten können je nach Erfordernis weitere spezielle Ausrüstungen haben, wie z.B. verstellbare Fußstützen, Armauflagen und dergleichen für Handarbeitsplätze.

Für eine vollautomatische Arbeitsstation kann zur Ausrüstung der Arbeitsplatzeinheit ein auf der Tischplatte montierter elektronisch gesteuerter Roboter bzw. mechanischer Handler mit einem Greifarm gehören, der aus einem Magazin, z.B. einem Sortierer oder Schwingförderer als Zuführer, Teile entnimmt und diese in das zu bearbeitende Werkstück einsetzt. Dazu kann der das Werkstück auf den Förderbändern transportierende Werkstückträger durch einen

8

Stopper am jeweiligen Arbeitsgerät angehalten werden und durch seitliche oder von unten kommende Zentrierstifte, sogenannte Indexstifte, in einer bestimmten Lage genau fixiert werden. Der Werkstückträger kann dabei zur Vermeidung von Reibbeanspruchungen zugleich von den Transportbändern abgehoben werden. Nach dem Einfügen bzw. Montieren des Werkstückteils durch den Greifarm wird der Werkstückträger mit dem darauf positionierten Werkstück wieder automatisch abgesenkt, aus den Zentrierteilen ausgeklinkt und vom Stopper freigegeben, so daß der Werkstückträger samt Werkstück auf den Transportbändern weiter transportiert werden kann.

Auf den eigenständigen Arbeitsplatzeinheiten können zweckmäßig auch pneumatisch oder hydraulisch über Zylinder betätigte Druckwerkzeuge für Stanz-, Preß- oder ähnliche Arbeitsgänge vorgesehen werden. Um unter dem wie zuvor beschrieben transportierten Werkstück den dazu notwendigen Gegendruck aufbringen zu können und dabei gleichzeitig das Werkstück von den Transportbändern abzuheben und das Fördermittel mechanisch druckfrei zu halten, kann es besonders günstig sein, das Werkstück mittels einer pneumatisch oder hydraulisch betätigbaren Hubvorrichtung anzuheben und in der angehobenen Position zu blockieren. Die einen Zylinder und einen Hubkolben aufweisende Hubvorrichtung wird zweckmäßig auf der Tischplatte der Arbeitsplatzeinheit montiert und greift durch den zwischen den beiden schmalen Transportbändern des Förderers bestehenden freien Abstand hindurch und drückt von unten gegen die Trägerplatte des Werkstückträgers und hebt diesen somit ebenfalls an. Um den den Werkstückträger tragenden Hubteil der Hubvorrichtung in der angehobenen Position mediumunabhängig sicher zu blockieren, kann es vorteilhaft sein, den Hubteil bzw. die Hubstange mechanisch zu verriegeln, und zwar so lange, bis der vom Pressenoberteil nach unten gegen das Werkstück aufgebrachte Druck abgebaut und der von oben wirkende Arbeitshub beendet bzw. aufgehoben ist. Dadurch können alle Arbeitsgänge, die mit Druck allein oder mit Druck und Rotation beaufschlagt sind (Stanzen, Pressen, Nieten, Rollieren usw.), ausgeführt werden.

Für Arbeitsvorgänge, bei denen sehr hohe Drücke erforderlich sind, können zweckmäßig Pressen mit einem kraftschlüssigen Rahmen zwischen Pressenoberteil und Amboß auf den Arbeitsplatzeinheiten befestigt werden. Dabei greift der hydraulisch oder pneumatisch anhebbare und mechanisch blockierbare Amboß (Hubteil) ebenfalls zwischen den beiden schmalen Transportbändern hindurch und hebt den Werkstückträger mit dem Werkstück zur Bearbeitung an. In besonders extremen Fällen kann es günstig sein, eine kraftschlüssige Presse, die auf einen Fußteil montiert ist, als eigenständige Arbeitsplatzeinheit auszubilden und in die Montagestraße mit einzureihen. Die Transportvorrichtungen bzw. Förderer sind dazu am Tisch der Presse so anzubringen, daß sie sich in der Ebene der sich anschließenden Transportbänder befinden und somit in das Montagesystem genau einfügen.

Die Werkstückträger oder die Werkstücke können für den Transport generell oder nach jedem Arbeitsgang Codierungen erhalten, die entlang des Transportweges abgefragt und so über einen Rechner gesteuert werden können. Die Werkstückträger können dadurch an Bearbeitungsstationen vorbeigelenkt oder diesen übergeben werden. Dadurch ist es möglich, auf einer einzigen Montagestraße bzw. Montageeinrichtung Werkstücke verschiedener Produkte gleichzeitig zu transportieren und zu bearbeiten, mit dem Vorteil, daß eine Optimierung der umlaufenden Werkstücke und eine Qualitätsverbesserung erreicht werden kann, wobei zudem eine Personalentlastung durch den Wegfall von sonst notwendigen Umrüstzeiten erzielt wird.

Bevorzugte Ausgestaltungen und Weiterbildungen, sowie weitere Vorteile und wesentliche Einzelheiten der Erfindung sind der nachfolgenden Beschreibung und der Zeichnung zu entnehmen, die in schematischer Darstellung bevorzugte Ausführungsformen als Beispiel zeigt. Es stellen dar:

FIG. 1 eine erfindungsgemäße Montageeinrichtung in einer Gesamtansicht,

FIG. 2 eine erfindungsgemäße Arbeitsplatzeinheit der Montageeinrichtung gemäß FIG. 1 in Vorderansicht (quer zur Transportrichtung),

FIG. 3 die Arbeitsplatzeinheit gemäß FIG. 2 in Seitenansicht, jedoch ohne Schaltschrank,

FIG. 4 die Arbeitsplatzeinheit gemäß FIG. 2 und 3 in Draufsicht,

FIG. 5 verschiedene Profilstrebendarstellungen bis 7 der Arbeitsplatzeinheit und des auf dieser positionierten Bandförderers,

FIG. 8 die Arbeitsplatzeinheit gemäß FIG. 2 bis 4 in Gesamtansicht,

FIG. 9 die Arbeitsplatzeinheit gemäß FIG. 8 mit zusätzlichen Querförderern,

FIG.10 die Arbeitsplatzeinheit gemäß FIG. 8 mit verschiedenen Zusatzeinrichtungen für eine manuelle Arbeitsplatzgestaltung,

FIG.11 die Arbeitsplatzeinheit gemäß FIG. 8 mit verschiedenen Zusatzeinrichtungen für eine automatische Arbeitsstation,

FIG. 12 die eigenständige kraftschlüssige Presse der Montageeinrichtung gemäß FIG. 1 (dritter Arbeitsplatz von links) in Vorderansicht,

FIG. 13 die kraftschlüssige Presse gemäß FIG. 12 in Seitenansicht, jedoch ohne Schaltschrank,

FIG. 14 die eigenständige kraftschlüssige Presse der Montageeinrichtung gemäß FIG. 1 (fünfter Arbeitsplatz von rechts) in Vorderansicht,

FIG. 15 die eigenständige kraftschlüssige Presse gemäß FIG. 14 in Seitenansicht, jedoch ohne Schaltschrank,

FIG. 16 den Werkstückträger der Montageeinrichtung gemäß FIG. 1 in geschnittener Seitenansicht,

FIG. 17 den quadratischen Werkstückträger gemäß FIG. 16 in Draufsicht,

FIG. 18 den Werkstückträger gemäß FIG. 17 in einer weiteren Schnittdarstellung,

FIG. 19 den Werkstückträger ähnlich FIG. 17 in Draufsicht, jedoch mit rechteckförmiger Grundfläche,

FIG. 20    Eckstücke, Zwischenstücke und Stützstege
bis 27   des Werkstückträgers gemäß FIG. 16 bis
19 in verschiedenen Ansichten,

FIG. 28   eine Hubvorrichtung der Montageeinrichtung
gemäß FIG. 1 für den Werkstückträger
in Seitenansicht,

FIG. 29   eine Hubvorrichtung der Montageeinrichtung
und 30   für den Werkstückträger gemäß FIG. 1
mit einem in die Hubstange eingreifenden
Verriegelungsbolzen in geschnittener
Seitenansicht und in Draufsicht,

FIG. 31   eine Hubvorrichtung der Montageeinrichtung
und 32   für den Werkstückträger ähnlich FIG.
29 und 30 in geschnittener Seitenansicht
und Draufsicht, jedoch mit zwei in
Führungssäulen des Hubteils eingreifende
mechanische Verriegelungsbolzen.

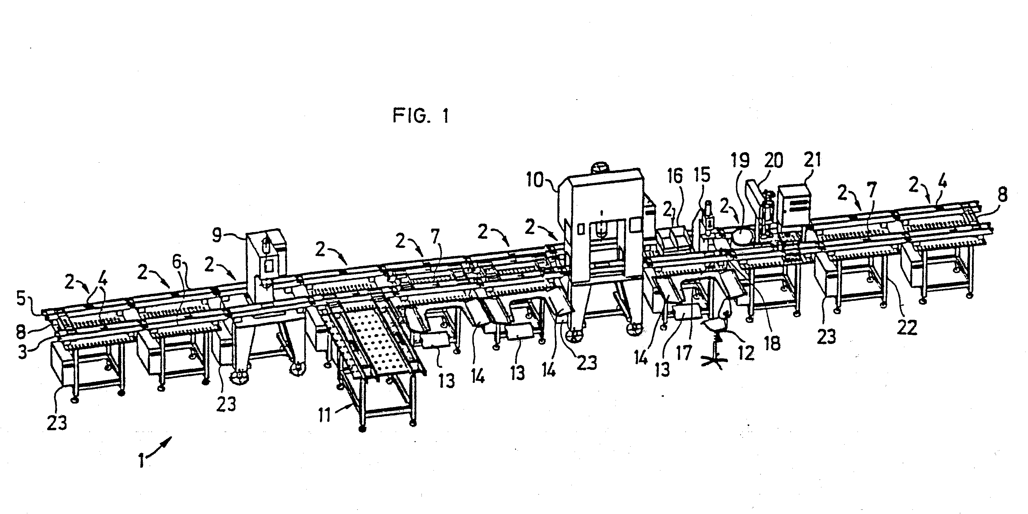

Die in der Zeichnung dargestellte erfindungsgemäße
Montageeinrichtung 1 ist als modulares flexibles
Montagesystem ausgeführt und aus eigenständigen
Arbeitsplatzeinheiten 2 gebildet, die linear aneinandergereiht sind. Die Montageeinrichtung
1 weist eine vordere Transportbahn 3 auf, auf
der Werkstückträger 4 in der FIG. 1 von links
nach rechts transportiert werden. Auf der hinteren
parallelen Transportbahn 5 können die Werkstückträger von rechts nach links zurückbefördert werden.

Die Transportbahnen 3 und 5 sind aus einzelnen Längsförderern 6 gebildet, die auf den Tischplatten 7 der Arbeitsplatzeinheiten 2 befestigt sind. Die am Anfang der Montageeinrichtungen 1 in der Zeichnung links dargestellte Arbeitsplatzeinheit 2 und die das Ende der Montageeinrichtung 1 bildende rechte Arbeitsplatzeinheit 2 weisen zudem je einen Querförderer 8 auf, die zwischen den beiden Transportbahnen 3 und 5 angeordnet sind, so daß die zu transportierenden Werkstückträger 4 an diesen Umlenkstationen von der einen Transportbahn 3,5 zur anderen Transportbahn 5,3 überwechseln können.

Der FIG. 1 ist zu entnehmen, daß die von links dritte Arbeitsplatzeinheit als Ständerpresse 9 ausgebildet ist und daß als siebte Arbeitsplatzeinheit eine weitere Ständerpresse 10 vorgesehen ist. Die letztgenannte Ständerpresse 10 ist deutlich stabiler ausgeführt als die Ständerpresse 9 und kann für wesentlich größere Druckkräfte ausgelegt sein. An die Vorderseite der sich an die erste Ständerpresse 9 anschließenden vierten Arbeitsplatzeinheit 2 ist eine Ausleitungsstation 11 angesetzt, auf deren Tischplatte 7 ebenfalls Längsförderer 6 angeordnet sind, die quer zur Transportbahn 3 verlaufen. Die Ausleitungsstation 11 kann z.B. für eine Umlenkung der Werkstückträger 4 ausgebildet werden oder als Transportpuffer dienen oder die Werkstückträger zu einer weiteren (hier nicht dargestellten) Montageeinrichtung 1 führen bzw. von dieser zurückbringen. Auch alle sonstigen Arbeitsplatzeinheiten 2 können nicht nur längs, sondern auch quer angedockt werden, so daß auf einfache Weise Montagestraßenabzweigungen, Montagenebenstraßen sowie weitere Hauptmontagestraßen und dergleichen gebildet bzw. verknüpft werden können.

Die in Förderrichtung der Transportbahn 3 von links nach rechts an fünfter, sechster und achter Stelle vorgesehenen Arbeitsplatzeinheiten 2 sind als sogenannte Handarbeitsplätze ausgeführt, vor denen jeweils eine Bedienungsperson auf einem Stuhl 12 Platz nehmen kann. Damit die Bedienungspersonen an diesen Handarbeitsstationen weitgehend ermüdungsfrei arbeiten können, sind an diesen Arabeitsplatzeinheiten 2 verstellbare Fußstützen 13 und Armauflagen 14 angeordnet, die sich zweckmäßig etwa in Höhe der Transportbahn 3 befinden und je nach der Art der durchzuführenden Handarbeit vorteilhaft vertikal eingestellt werden können. Auf der Tischplatte 7 der sich rechts an die große Ständerpresse 10 anschließenden Arbeitsplatzeinheit 2 ist zwischen der vorderen Transportbahn 3 und der hinteren Transportbahn 5 eine Tischpresse 15 vorgesehen, neben der stapelfähige Griffschalen 16 sich befinden, in denen verschiedene Werkstückteile bereit-gehalten werden können. Diese Arbeitsplatzeinheit 2 mit der Tischpresse 15 ist konkret als manuelle Preß- und Nietstation ausgeführt.

Auf der Tischplatte 7 dieser manuellen Nietstation ist vor der Tischpresse 15 außerdem eine Hubvorrichtung 17 befestigt, die durch die vordere Transportbahn 3 von unten hindurchgreift und den Werkstückträger 4 von der Transportbahn 3 abhebt und für den Preß- bzw. Nietvorgang als unteres Widerlager bzw. Amboß dient. Das Anhalten des Werkstückträgers 4 auf der Transportbahn 3 an der Nietstation kann zweckmäßig über einen automatisch steuerbaren Stopper 18 erfolgen. Die Hubvorrichtung 17 ist ebenfalls auf den Tischplatten 7 der beiden Ständerpressen 9 und 10 im Bereich der Längsförderer 6 vorgesehen.

Die sich an die rechte Seite der manuellen Nietstation anschließende Arbeitsplatzeinheit 2 der Montageeinrichtung 1 ist beim vorliegenden Ausführungsbeispiel als Automatikstation ausgeführt, auf deren Tischplatte 7 zwischen der vorderen Transportbahn 3 und der hinteren Transportbahn 5 ein Werkstückteile zuführender Schwingförderer 19, eine Nietmaschine 20 und ein Steuergehäuse 21 angeordnet sind. Auch hier können, wie an den anderen Arbeitsplatzeinheiten 2, für das positionsgerechte Anhalten der Werkstückträger 4 auf den Längsförderern 6 entsprechende steuerbare Stopper 18 vorgesehen sein.

Die Tischplatten 7 der eigenständigen Arbeitsplatzeinheiten 2 sind jeweils auf einem Grundgestell 22 angeordnet, an dessen linker Seite unter der Ebene der Tischplatte 7 jeweils ein Schaltschrank 23 befestigt ist, in dem die Steuereinrichtungen für die Längsförderer 6 und Querförderer 8 sich befinden. An der Ständerpresse 10 ist oben rechts ein weiterer Schaltkasten befestigt. Die einzelnen Arbeitsplatzeinheiten 2 sind miteinander fest aber lösbar verbunden, wobei zweckmäßig hier nicht näher dargestellte mechanische Schnellverbinder verwendet werden können, die z.B. als Schnellschraubverbindung, Bajonettverschluß oder dergleichen ausgeführt sein können. Für die pneumatischen und/oder hydraulischen Versorgungsleitungen und die Elektroleitungen können die eigenständigen Arbeitsplatzeinheiten 2 ebenfalls entsprechende Schnellverbindungen bzw. Steckkupplungsverbindungen für eine problemlose und schnelle Verkettung der Arbeitsplatzeinheiten 2 aufweisen, so daß mit einfachen Mitteln eine schnelle Änderung oder Erweiterung der Montageeinrichtung 1 durch Hinzufügen oder Herausnahme einzelner Arbeitsplatzeinheiten 2 möglich ist, ohne daß ein kostenintensiver langer Produktionsausfall entsteht, da etwaige Umrüstarbeiten in kürzester Zeit durchgeführt werden können. Die FIG. 1 läßt erkennen, daß die auf den Werkstückträgern 4 positionierten Werkstücke aufgrund der vorteilhaften Ausführung der Montageeinrichtung 1 mit den zwischen den vorderen und hinteren Längsförderern 6 vorgesehenen Arbeitsgeräten nicht nur auf der vorderen Transportbahn 3, sondern auch auf der hinteren Transportbahn 5 bearbeitet werden können, so daß eine doppelte Nutzung der Arbeitsplatzeinheiten 2 möglich ist (Doppelarbeitsplatz) und gleichzeitig eine ungehindert gute Zugänglichkeit zu den auf den Werkstückträgern 4 befindlichen Werkstücken gegeben ist, da von innen nach außen gearbeitet wird, wodurch insgesamt eine hohe Produktionsleistung erzielt werden kann.

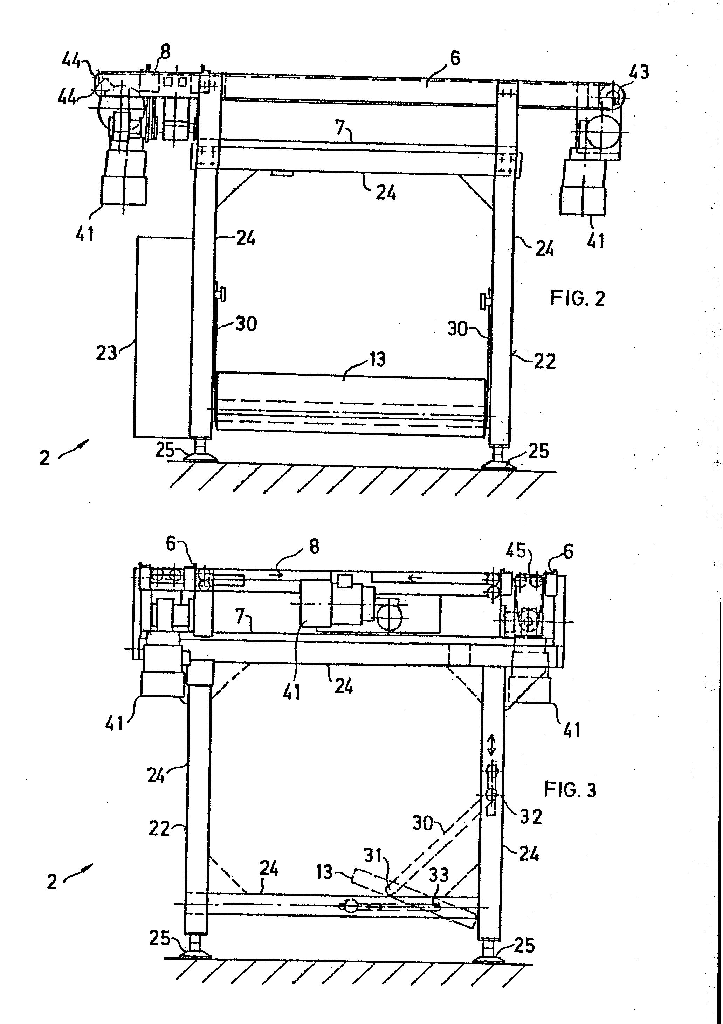

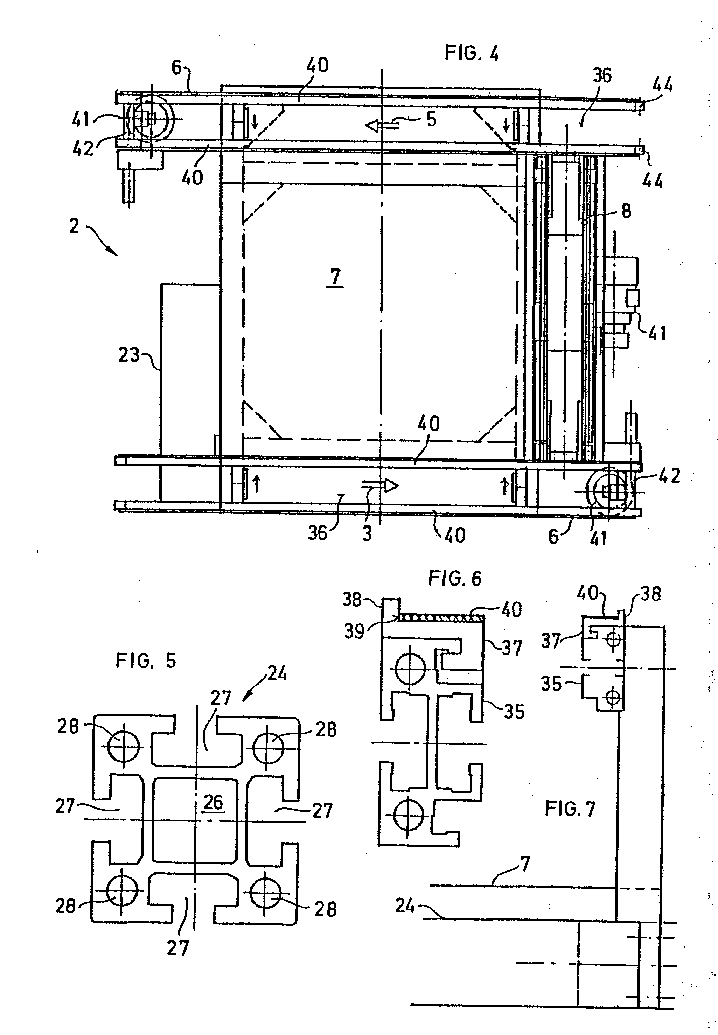

Wie insbesondere auch den FIG. 2 bis 11 zu entnehmen ist, kann das Grundgestell 22 einer jeden Arbeitsplatzeinheit 2 aus bevorzugt quadratischen Hohlprofilstreben 24 (FIG. 5) gebildet sein, die z.B. mittels Schrauben lösbar miteinander verbunden sind. Unten weist das Grundgestell 22 Fußteile 25 auf, die höhenverstellbar gelagert sind, so daß die Arbeitsplatzeinheit 2 ohne zusätzliche Beilagen oder dergleichen genau ausgerichtet werden kann. Die FIG. 5 zeigt, daß die Hohlprofilstrebe 24 im mittleren Bereich einen durchgehenden Kanal aufweist, der bevorzugt als Versorgungsleitung 26 ausgeführt sein kann, durch die ein Medium (Druckluft, Flüssigkeit) zu den Arbeitsgeräten geführt werden kann. Die Versorgungsleitung 26 ist somit in der Hohlprofilstrebe 24 integriert. Die Hohlprofilstrebe 24 weist zudem an allen vier Seiten je eine T-Nut 27 auf, die der Schraubbefestigung zusätzlicher Bauteile dient. Außerdem sind in den vier Eckbereichen der Hohlprofilstrebe 24 Befestigungslöcher 28 ausgebildet. Am jeweiligen Ende der Versorgungsleitung 26 der Hohlprofilstrebe 24 kann die Versorgungsleitungsverbindung 29 sich befinden, über die eine Schnellankupplung an die nächste Arbeitsplatzeinheit 2 erfolgen kann. Von der Versorgungsleitung 26 werden die hier nicht näher dargestellten Abzweigleitungen zu den jeweiligen Arbeitsgeräten geführt, wobei auch diese Abzweigleitungen vorteilhaft durch Schnellkupplungen angeschlossen werden können. Die Versorgungsleitung 26 muß nicht ausschließlich in der Hohlprofilstrebe 24 des Grundgestells 22 selbst verlaufen, sondern es ist auch möglich, an das Grundgestell 22 eine weitere Hohlprofilstrebe

24 anzuschrauben, die für die Versorgungsleitung 26 vorgesehen ist.

Insbesondere der FIG. 3 ist zu entnehmen, daß die Fußstütze 13 in ihrer Ebene, Höhe und Tiefe stufenlos verstellbar ist. Dazu ist eine Verbindungsstrebe 30 an einem außermittigen Drehpunkt 31 an der Fußstütze 13 angelenkt und anderenends über einen Beschlagteil 32 an der vertikalen Hohlprofilstrebe 24 des Grundgestells 22 in der Höhe stufenlos verstellbar gelagert. Eine zweite außermittige Schwenkachse 33 der Fußstütze 13 ist in der unteren horizontalen Hohlprofilstrebe 24 des Grundgestells 22 horizontal verschiebbar gelagert und stufenlos verstellbar, so daß die Fußstütze 13 in jeder beliebigen Zwischenposition individuell eingestellt werden kann.

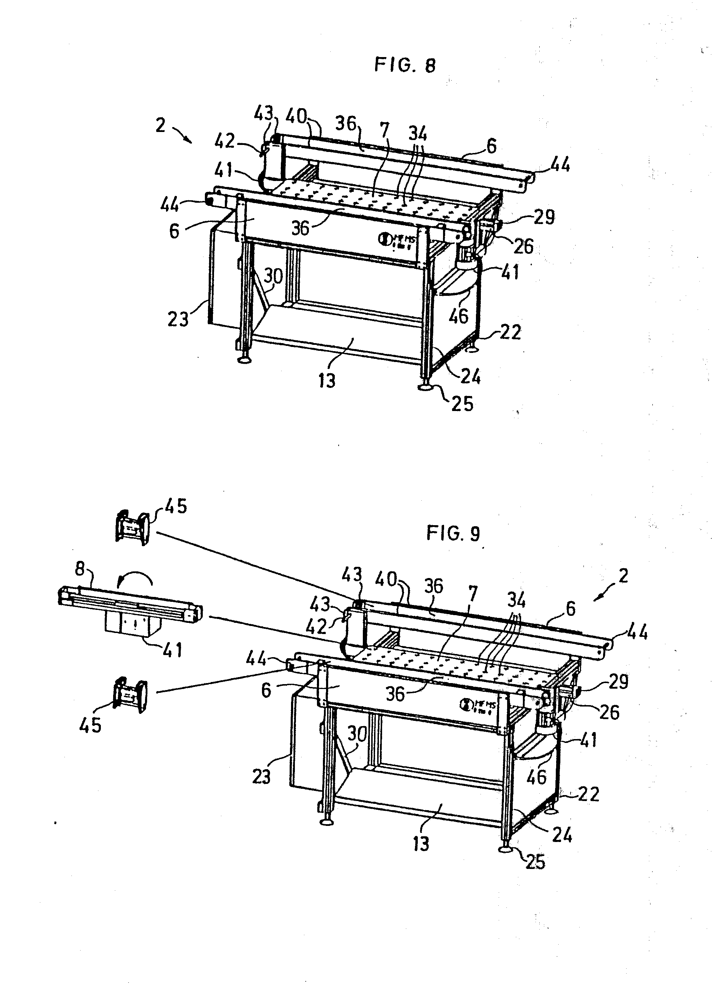

Die FIG. 8 bis 11 zeigen deutlich, daß in der Tischplatte 7 der Arbeitsplatzeinheit 2 für die Befestigung der verschiedenen Zubehörteile bzw. Geräte, wie Längsförderer 6, Querförderer 8, Tischpresse 25, Hubvorrichtung 17, Schwingförderer 19, Nietmaschine 20 und Steuergehäuse 21, Aufnahmen 34 ausgebildet sind. Diese Aufnahmen 34 können als Bohrungen oder als Gewindelöcher ausgeführt sein und sind zweckmäßig in vorbestimmten regelmäßigen Abständen (Rastermaß) angeordnet. Eine solche Rastermaß-Aufnahme 34 bietet den Vorteil, daß die zu montierenden Geräte je nach Bedarf wahlweise plaziert werden können, ohne daß aufwendige Bohrarbeiten durchzuführen sind. Dabei kann es auch vorteilhaft sein, statt einer Rasterlochung Befestigungsnuten parallel oder kreuzförmig an der Tischplatte 7 vorzusehen, so daß auch dadurch eine schnelle und unkomplizierte Gerätebefestigung erreicht werden kann.

Die FIG. 2 bis 11 zeigen deutlich, daß der an der Tischplatte 7 anzuordnende Längsförderer 6 zwei parallele Hohlprofilstangen 35 aufweist, die horizontal verlaufen und auf Abstand 36 zueinander angeordnet sind. An diesen Hohlprofilstangen 35 ist je eine Gleitschiene 37 befestigt, die im Querschnitt etwa Z-förmig ausgeführt ist und außen einen Führungssteg 38 besitzt (FIG. 6), der den Außenrand 39 eines bevorzugt als Gurtband ausgeführten schmalen Förderbandes 40 nach oben hin überragt. An dem Führungssteg 38 der Gleitschiene 37 ist der Werkstückträger 4 seitengeführt, so daß ein exakter linearer Transport gewährleistet ist. Die Gleitschiene 37 und das Förderband 40 sind bezüglich der konstruktiven Ausführung und der Materialwahl so aufeinander abgestimmt, daß die Gleitreibung äußerst gering ist.

Jeder einzelne Längsförderer 6 und auch Querförderer 8 besitzt einen eigenen Antriebsmotor 41, dem ein Getriebe zugehörig sein kann und der vorteilhaft sowohl bezüglich der Drehzahl als auch der Drehrichtung stufenlos regelbar ist, wodurch eine genaue Geschwindigkeitsabstimmung erzielt werden kann und wahlweise ein entgegengerichteter oder in derselben Richtung verlaufender Transport der Werkstückträger 4 praktiziert werden kann. An der Antriebsseite des Längsförderers 6 ist eine Achse 42 vorgesehen, auf der für die beiden parallelen Förderbänder 40 je eine Triebscheibe 43 angeordnet ist, die von dem Förderband 40 umschlungen ist. An dem der Antriebsseite gegenüberliegenden anderen Ende des Förderers 6 befinden sich zweckmäßig zwei übereinander angeordnete Umlenkrollen 44, von denen die untere derart nachstellbar ausgeführt sein kann, daß das Förderband 40 stets ausreichend straff gespannt ist.

Der Längsförderer 6 und der Querförderer 8 sind erfindungsgemäß so gestaltet, daß der Abstand 36 zwischen den beiden schmalen Förderbändern 40 und/oder den Führungsstegen 38 verändert werden kann, so daß verschieden große Werkstückträger 4 sowohl längs als auch quer auf der Montageeinrichtung 1 transportiert werden können, ohne daß besondere Drehvorrichtungen oder dergleichen für die Werkstückträger 4 vorgesehen werden müssen. Für eine einfache und schnelle Änderung der Förderbreite kann es günstig sein, mindestens eine der Triebscheiben 43 und der Umlenkrollen 44 der Förderer 6,8 auf der Achse zu verstellen, wobei es zweckmäßig ist, jeweils die Triebscheibe 43 und Umlenkrolle 44 axial zu verlagern, die der Tischplattenmitte am nächsten liegt. Zur einfachen Verstellung kann es vorteilhaft sein, an der Triebscheibe 43 und der Umlenkrolle 44 entsprechende Schraub-

klemmschellen vorzusehen, die gegen die Achsen verspannt werden. Der Querförderer 8 kann zweckmäßig gleich oder ähnlich dem Längsförderer 6 ausgeführt sein, wobei auf jeden Fall auch eine Veränderung der Breite bzw. des Abstands der beiden Förderbänder 40 zueinander vorgesehen ist. Beim Querförderer 8 kann der Antriebsmotor 41 vorteilhaft etwa im Bereich der Querförderlängsmitte angeordnet sein. Damit der Werkstückträger 4 vom Längsförderer 6 auf den Querförderer 8 rechtwinklig übergeben werden kann, wird zwischen den beiden Förderbändern 40 des Längsförderers 6 ein schmaler Querförderteil 45 angeordnet (FIG. 9), der auf der Tischplatte 7 befestigt werden kann. Die Breite des Förderteils 45 entspricht im wesentlichen der Breite des Querförderers 8. Damit der Werkstückträger 4 beim Transport auf dem Längsförderer 6 nicht am Querförderteil 45 anschlägt, befindet sich dessen Oberseite in der Nichtfunktionsstellung etwas unter der Förderebene der Förderbänder 40. Wenn der Werkstückträger 4 auf einen Querförderer 8 übertragen werden soll, wird der Querförderteil 45 entsprechend angesteuert, so daß die Oberseite mit der Palette etwas über die Ebene der Förderbänder 40 automatisch angehoben wird, wobei der Werkstückträger 4 vom Förderband des Querförderteils 45 über das Förderband 40 des Längsförderers 6 hinweg auf den Querförderer 8 bewegt wird.

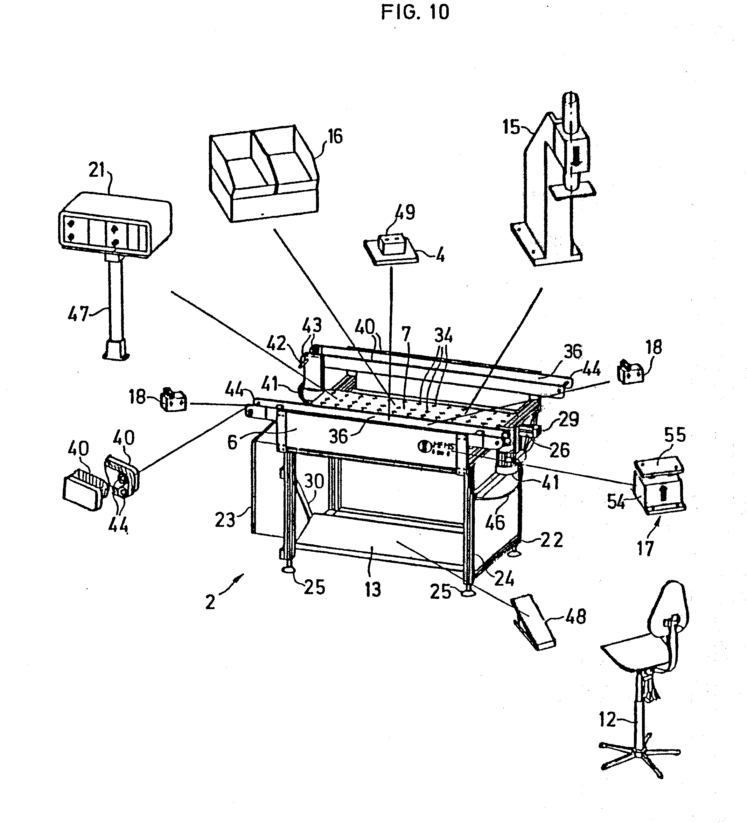

Den FIG. 8 bis 11 ist zu entnehmen, daß am Antriebsmotor 41 ein Elektrokabel 46 angeschlossen ist, das durch die Hohlprofilstrebe 24 des Grundgestells 22 hindurchgeführt sein kann. In der FIG. 10 ist dargestellt, daß der Arbeitsplatzeinheit 2 zur Ausgestaltung als manuelle Arbeitsstation das Steuergehäuse 21, das platzsparend auf einem Rohrständer 47 angeordnet ist, die Griffschale 16, die Tischpresse 15, die Hubvorrichtung 17, zwei Stopper 18, ein Fußschalter 48 und der Stuhl 12 zugeordnet sein können. Auf dem vom Längsförderer 6 zu transportierenden Werkstückträger 4 ist das zu bearbeitende bzw. zu vervollständigende Werkstück 49 positioniert.

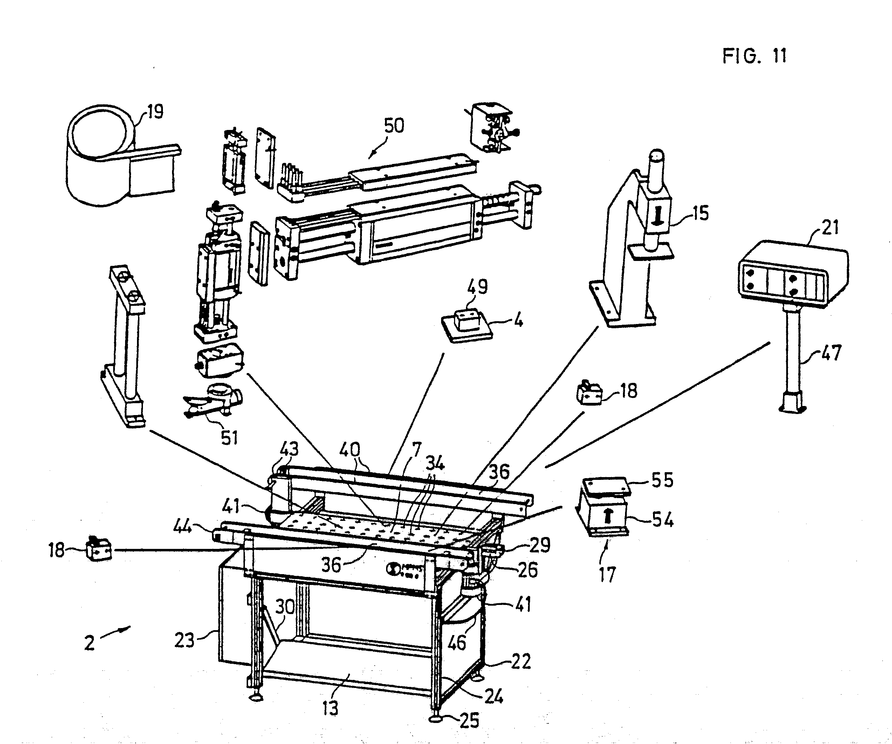

Die in der FIG. 11 dargestellte Arbeitsplatzeinheit 2 ist als Automatikstation ausgeführt und weist zusätzlich zu der Tischpresse 15, der Hubvorrichtung 17, dem Steuergehäuse 21 und den beiden Stoppern 18 für den Werkstückträger 4 einen automatisch gesteuerten Roboter (Handler) 50 auf, der mit einem Greifarm 51 dem Schwingförderer 19 Werkstückteile entnimmt und an die Tischpresse 15 bzw. das Werkstück 49 anträgt.

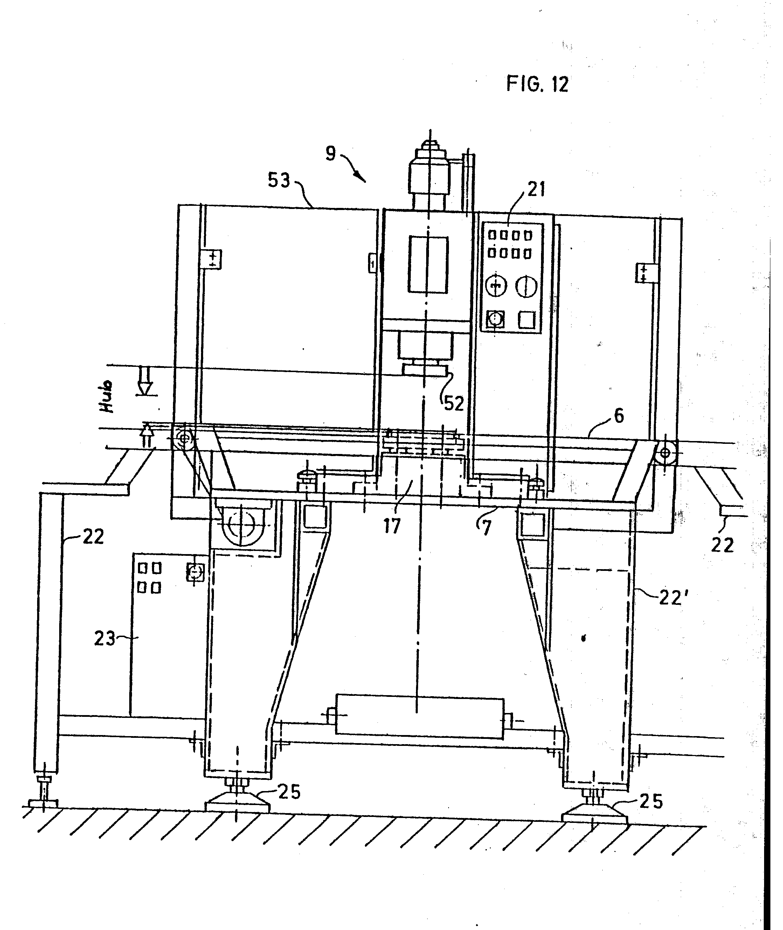

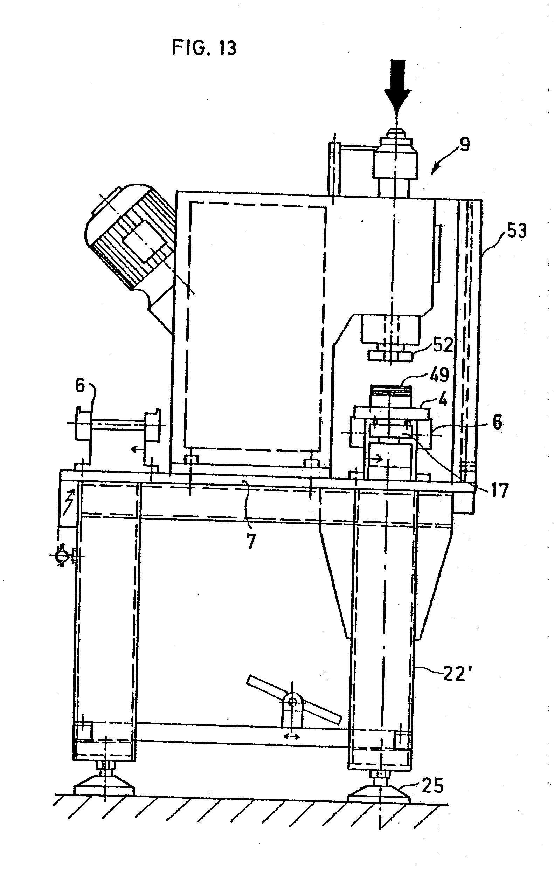

Die Ständerpresse 9 der FIG. 12 und 13 ist ebenfalls als eigenständige Arbeitsplatzeinheit ausgeführt, die wie die zuvor beschriebenen Arbeitsplatzeinheiten 2 ohne weiteres in die Montageeinrichtung 1 integrierbar ist. Die Ständerpresse 9 besitzt einen kraftschlüssigen Rahmen und ist auf einem Grundgestell 22' aufgebaut, das erheblich stabiler ausgeführt ist als das Grundgestell 22 der übrigen Arbeitsplatzeinheiten 2. Auf der Tischplatte 7 sind der Längsförderer 6 und die Hubvorrichtung 17 angeordnet, die als Amboß für den von oben angreifenden Pressenstempel 52 dient. An der linken Seite des Grundgestells 22' ist der Schaltschrank 23 für den Längsförderer 6 positioniert, während das Steuergehäuse 21 oben rechts an der Ständerpresse 9 sich befindet. Die Ständerpresse 9 ist aus Sicherheitsgründen oben zudem mit einer Schutzeinrichtung 53 versehen.

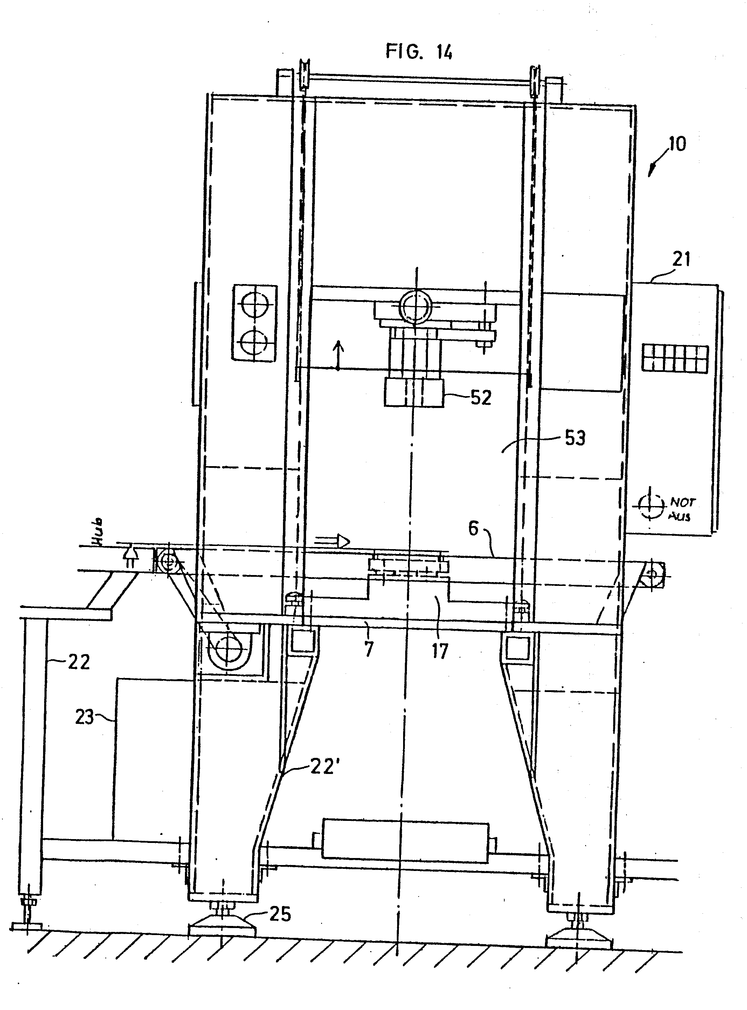

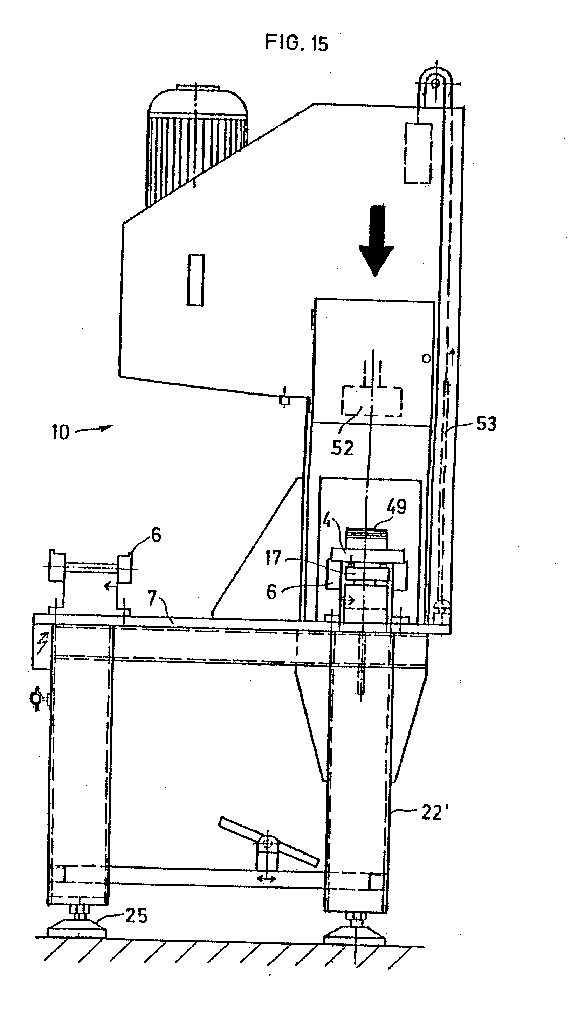

Die in den FIG. 14 und 15 dargestellte Ständerpresse 10 ist ähnlich wie die zuvor beschriebene Ständerpresse 9, jedoch noch stabiler ausgeführt und befindet sich ebenfalls auf einem äußerst stabilen Grundgestell 22'. Mit der Ständerpresse 10 können über den Pressenstempel 52 noch größere Druckkräfte in Richtung gegen die zwischen den Förderbändern 40 des Längsförderers 6 vorgesehene Hubvorrichtung 17 aufgebracht werden. Auch hier ist eine Schutzeinrichtung 53 vorgesehen. Die Ständerpresse 10 ist in Länge und Breite wie auch die Ständerpresse 9 so ausgeführt, daß sie ohne weiteres in die Montageeinrichtung 1 integriert werden kann bzw. gegen eine andere Arbeitsplatzeinheit 2 ausgetauscht werden kann. Der vordere und hintere Längsförderer 6 befinden sich in der gleichen Ebene wie die Längsförderer 6 der anderen Arbeitsplatzeinheiten 2. Das Steuergehäuse 21 ist an der oberen rechten Seite der Ständerpresse 10 befestigt.

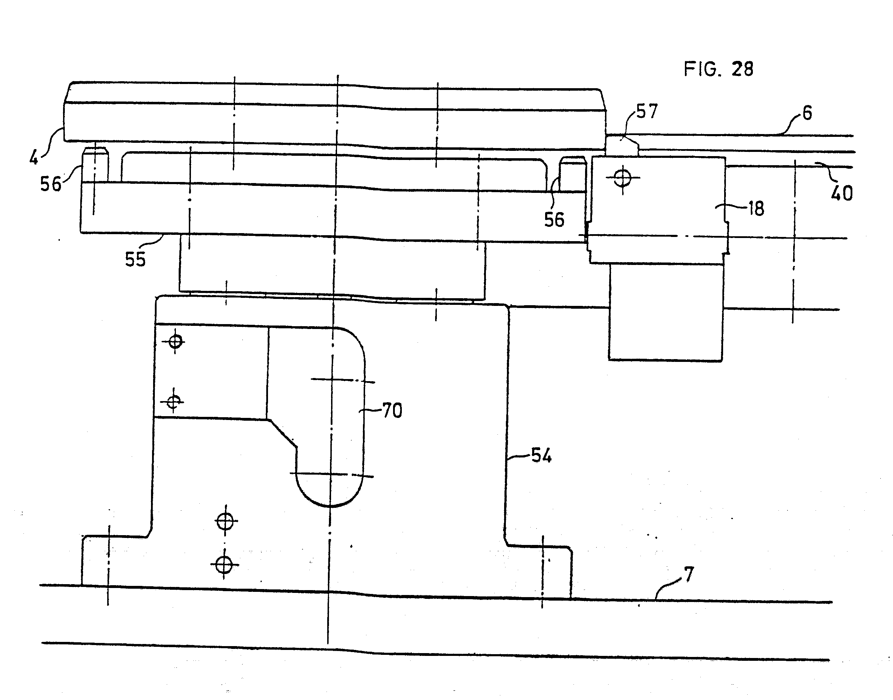

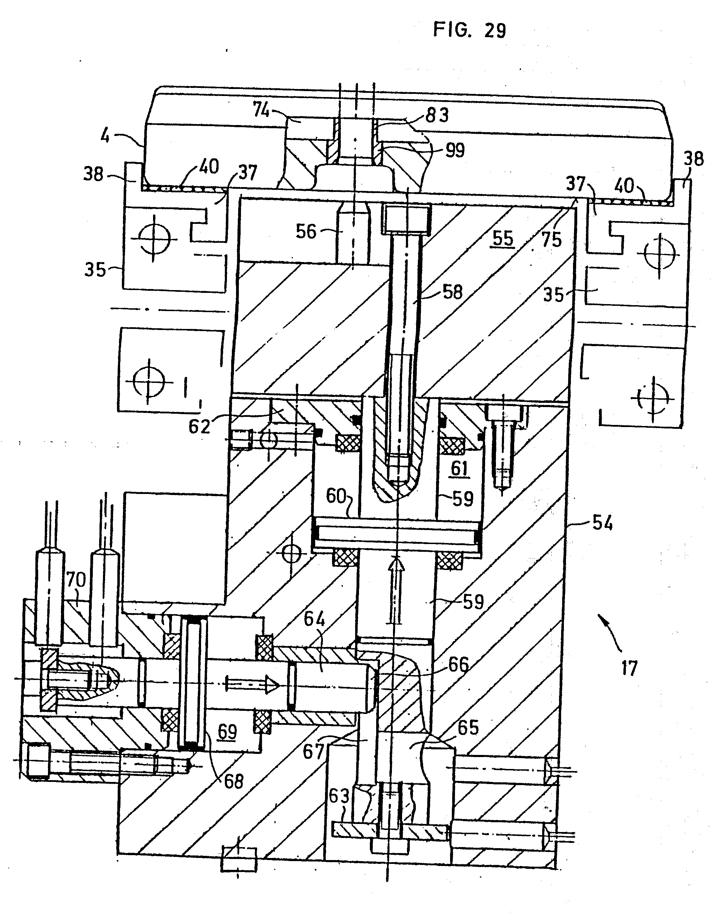

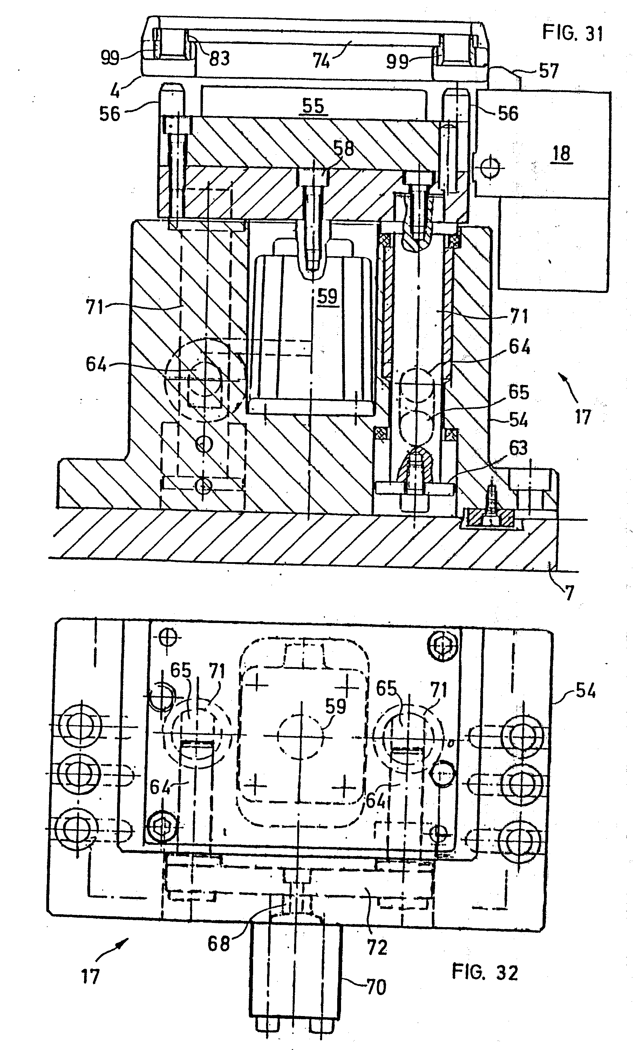

Die in den FIG. 28 bis 32 näher dargestellte Hubvorrichtung 17 besitzt ein Gehäuse 54, dessen Fuß auf der Tischplatte 7 der Abeitsplatzeinheit 2 bzw. des Grundgestells 22,22' befestigt wird. Die Hubeinrichtung 17 kann elektrisch, bevorzugt pneumatisch oder hydraulisch betrieben werden und weist einen Hubteil 55 auf, an dem zwei einander gegenüberliegende Zentrierstifte 56 angeordnet sind, die beim Anheben des Hubteils 55 in den Werkstückträger 4 eingreifen. In der FIG. 28 ist deutlich zu erkennen, daß der Stopper 18 einen elektrisch, pneumatisch oder hydraulisch betätigbaren Anschlagteil 57 besitzt, der über das Förderband 40 hinausragt und gegen den die Palette stößt, so daß sie bei laufendem Förderband 40 genau an der Stelle angehalten wird, an der sie vom Hubteil 55 hochgehoben werden soll, wobei über die Zentrierstifte 56 eine exakte Lagefixierung für die weitere Bearbeitung mittels der Presse oder dergleichen gewährleistet ist. Nach der Durchführung des Bearbeitungsvorgangs wird der Hubteil 55 abgesenkt, so daß die Zentrierstifte 56 wie dargestellt sich wieder frei unter dem Werkstückträger 4 befinden und dieser auf den Förderbändern 40 aufliegt. Danach wird der Anschlagteil 57 des Stoppers 18 eingefahren, so daß der Weg für den Weitertransport des Werkstückträgers 4 freigegeben ist. Den FIG. 29 und 31 ist zudem zu entnehmen, daß in dem Werkstückträger 4 Zentrierbuchsen 99 vorgesehen sind, in die die Zentrierstifte 56 weitgehend spielfrei eingreifen, wodurch eine genaue Justierung des Werkstückträgers 4 gegeben ist.

Die FIG. 29 bis 32 zeigen, daß der Hubteil 55 zweckmäßig über einen als Schraube ausgeführten Verbindungsteil 58 an einer vertikalen Hubstange 59 befestigt ist. An der Hubstange ist ein Hubkolben 60 vorgesehen, der sich in einem Hubzylinder 61 befindet, der im Gehäuse 54 ausgebildet ist. An der dem Hubteil 55 zugewandten Seite ist der Hubzylinder 61 mittels einer Verschlußplatte 62 abgesperrt. Am unteren Ende der Hubstange 59 befindet sich ein Endanschlag 63, der den Hub nach oben hin begrenzt.

Darüber hinaus weist die Hubvorrichtung 17 einen Verriegelungsbolzen 64 auf, der horizontal liegt und sich demnach quer zur Hubstange 59 erstreckt. Über diesen Verriegelungsbolzen 64 ist der Hubteil 65 in der angehobenen Position blockiert bzw. so festgelegt, daß eine mechanische Verriegelung gegeben ist, indem der Verriegelungsbolzen 64 in eine Querbohrung 65 der Hubstange 59 eingreift. Dadurch ist eine absolut sichere, mediumunabhängige Festlegung des Hubteils 55 in der angehobenen Position sichergestellt, so daß auch sehr große Druckkräfte aufgenommen werden können. Der Verriegelungsbolzen 64 befindet sich mit seinem freien Endteil 66 in der nicht angehobenen Position des Hubteils 55 in einer Führungsnut 67, die in der Hubstange 59 in deren Längsrichtung ausgebildet ist, wodurch eine Sicherung gegen Verdrehen erzielt wird. Der Verriegelungsbolzen 64 kann bevorzugt mit einem Verriegelungskolben 68 einstückig ausgebildet sein, der in einem Verriegelungszylinder 69 gelagert ist, der im Gehäuse 54 ausgebildet ist und über einen äußeren Anschlußteil 70 verschlossen .ist. Über den Anschlußteil 70 kann Druckluft oder Pneumatikflüssigkeit für die Betätigung des Verriegelungsbolzens 64 zugeführt werden. Es kann jedoch auch günstig sein, den Verriegelungsbolzen 64 elektrisch zu betätigen.

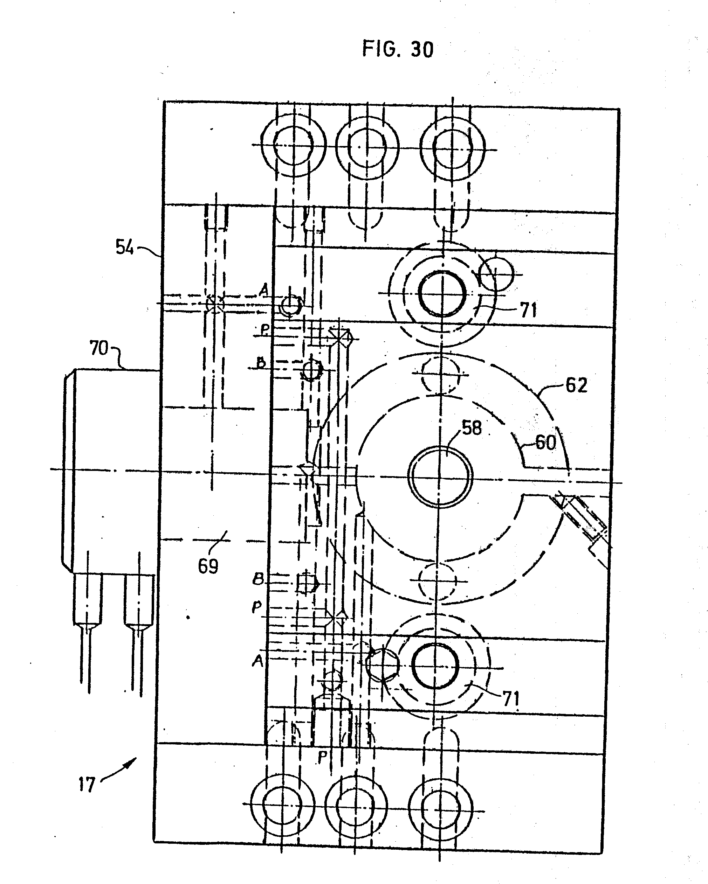

Die Hubvorrichtung 17 der FIG. 31 und 32 ist im wesentlichen wie die zuvor beschriebene Hubvorrichtung 17 der FIG. 29 und 30 ausgeführt und vor allem auch in der angehobenen Position verriegelbar. Ein wesentlicher Unterschied besteht jedoch darin, daß zwei Verriegelungsbolzen 64 vorgesehen sind, die nicht in die Hubstange 59, sondern in die zwei Führungssäulen 71 eingreifen, die an zwei gegenüberliegenden Seiten der Hubstange 59 parallel und auf Abstand zu dieser angeordnet sind. Die für den Eingriff der Verriegelungsbolzen 64 vorgesehenen Querbohrungen 65 befinden sich demnach in den Führungssäulen 71. Auch weisen diese jeweils eine Führungsnut 67 auf, in der sich der Endteil 66 der Verriegelungsbolzen 64 im Nichtverriegelungszustand befindet. Die Hubbegrenzung erfolgt über die an den unteren Enden der Führungssäulen 71 befestigten Anschläge 63. Die beiden prallelen Verriegelungsbolzen 64 sind an einer gemeinsamen Verbindungsstrebe 72 an deren Endbereichen angeordnet. Der über den pneumatischen oder hydraulischen Anschlußteil 70 mit Druckmedium beaufschlagte Verriegelungskolben 68 greift in der Mitte der Verbindungsstrebe 72 zwischen den beiden Verriegelungsbolzen 64 an.

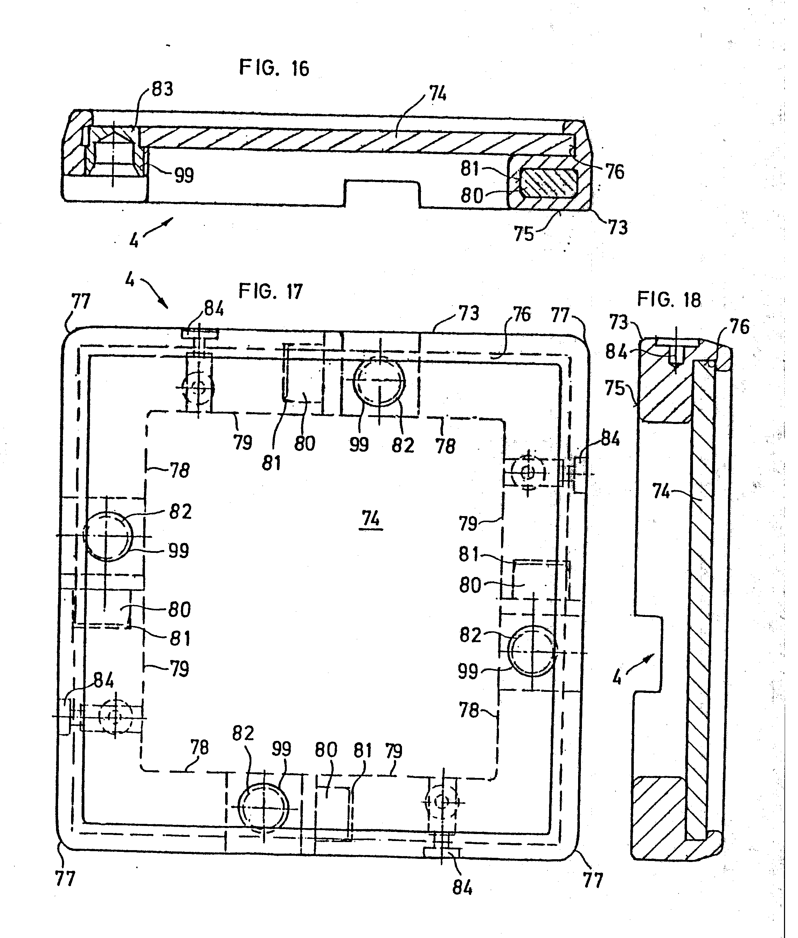

Der insbesondere in den FIG. 16 bis 27 deutlich erkennbare Werkstückträger 4 weist einen vorzugsweise aus Kunststoff bestehenden Rahmen 73 und eine vorzugsweise aus Metall bestehende Tragplatte 74 auf. Auf der Tragplatte 74 kann das zu bearbeitende Werkstück 49 fest positioniert werden. Der Rahmen 73 liegt mit seiner Unterseite 75 auf den Förderbändern 40 auf. An einer Innenseite des Rahmens 73 ist eine U-förmige Nut 76 ausgebildet, in die der Umfangsrand der Tragplatte 74 eingreift, so daß letztere sicher gehalten ist.

Der Rahmen 73 des Werkstückträgers 4 besitzt vier rechtwinklige Eckstücke 77. Die zwei Schenkel 78,79 des Eckstücks 77 sind etwa gleich lang ausgeführt. Am Ende des Schenkels 78 befindet sich ein vorstehender Zapfen 80 rechteckförmigen Querschnitts, während im Endbereich des anderen Schenkels 79 eine Ausnehmung 81 ausgebildet ist, deren Querschnitt dem des Zapfens 80 eng angepaßt ist. IN dem Schenkel 78 des Eckstücks 77 ist zudem eine Bohrung 82 ausgebilet, in die die im Durchmesser abgestufte Zentrierbuchse 99 für den Zentrierstift 56 formschlüssig und spielfrei einsteckbar ist. Dabei greift die Zentrierbuchse 99 mit einem im Außendurchmesser kleineren Rohransatz 83 in ein Loch der Tragplatte 74 ein, wodurch diese im Rahmen 73 exakt fixiert ist. Die Bohrung 82 für die Zentrierbuchse 99 ist zweckmäßig an allen vier Eckstücken 77 ausgebildet. Darüber hinaus ist zu erkennen, daß der Schenkel 79 des Eckstücks 77 einen vorzugsweise bolzenförmig ausgebildeten Bedämpfungsteil 84 aufweist, der in den Schenkel 79 einsteckbar ist. Der Bedämpfungsteil 84 ist zur Steuerung des Werkstückträgers 4 vorgesehen und wirkt mit induktiven Endschaltern zusammen, die an entsprechenden Stellen der Montageeinrichtung 1 vorgesehen werden können. Auch der Bedämpfungsteil 84 kann an allen vier Eckstücken 77 des Werkstückträgers 4 positioniert werden.

In der kleinsten Grundform des Werkstückträgers 4 (FIG. 16 bis 18) besteht der Rahmen 73 ausschließlich aus den vier zusammengesteckten Eckstücken 77, so daß eine quadratische Grundform gebildet ist. Dabei greifen die Zapfen 80 der Schenkel 78 spielfrei in die Ausnehmungen 81 der angrenzenden Schenkel 79 ein, so daß ein fester Halt gegeben ist, der dadurch stabilisiert wird, daß die Zentrierbuchsen 99 quer zur Einsteckrichtung der Zapfen 80 in die Tragplatte 74 eingreifen, so daß insgesamt eine stabile und feste Trageinheit gegeben ist.

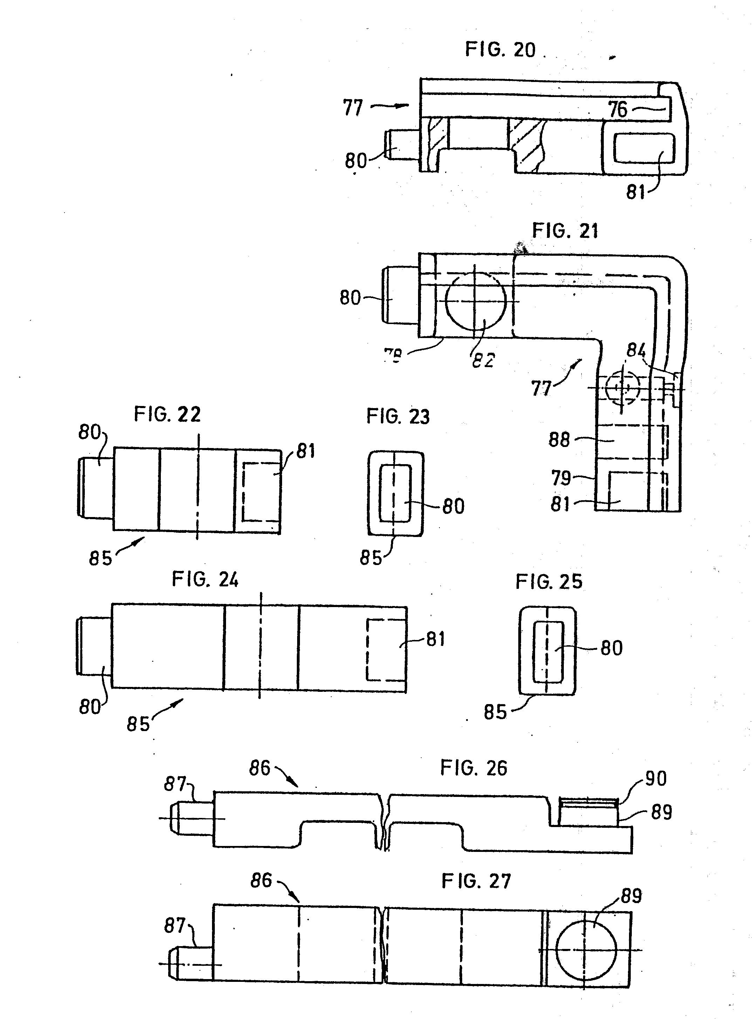

Darüber hinaus zeichnet sich der Werkstückträger 4 besonders dadurch aus, daß Zwischenstücke 85 vorgesehen sind, die bevorzugt ebenfalls aus Kunststoff hergestellt sind und zwischen die Schenkel 78,79 der Eckstücke 77 einsetzbar sind, wodurch eine Vergrößerung des Rahmens 73 erzielt werden kann. Dazu besitzt das etwa stabförmige Zwischenstück 85 am einen Ende ebenfalls einen im Querschnitt etwa rechteckförmigen Zapfen 80, während im gegenüberliegenden anderen Endbereich des Zwischenstücks 85 eine entsprechend ausgebildete rechteckförmige Ausnehmung 81 ausgebildet ist. Zweckmäßig können die Zwischenstücke 85 in verschiedenen Längen vorgesehen sein. So ist das in der FIG. 24 dargestellte Zwischenstück 85 annähernd doppelt so lang wie das Zwischenstück 85 der FIG. 22. Beim Zusammenstecken des vergrößerten Rahmens 73 greift der Zapfen 80 des Zwischenstücks 85 in die Ausnehmung 81 des Schenkels 79 des Eckstücks 77 formschlüssig ein. An der anderen Seite greift der Zapfen 80 des Schenkels 78 des anderen Eckstücks 77 in die Ausnehmung 81 des Zwischenstücks 85 ebenfalls formschlüssig ein. Die kurzen oder langen Zwischenstücke 85 können wahlweise nur an zwei parallelen Seiten zwischen den Eckstücken 77 des Rahmens 73 vorgesehen werden, so daß der

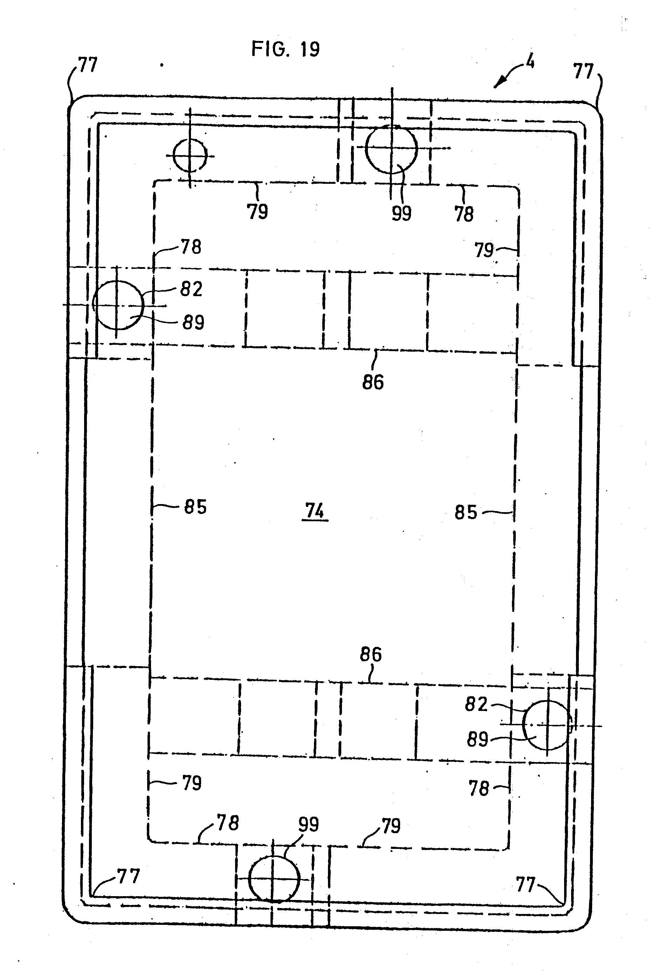

Werkstückträger 4 eine kleinere oder größere Rechteckform (FIG. 19) aufweist. Es ist jedoch auch möglich, die Zwischenstücke 85 an allen vier Seiten zwischen den Eckstücken 77 anzubringen und dabei können z.F. ausschließlich die kurzen Zwischenstücke 85 oder ausschließlich die langen Zwischenstücke 85 eingesetzt werden, so daß verschiedene quadratische Grundformen erreicht werden können. Außerdem ist es möglich, an zwei parallelen Seiten zwei kurze Zwischenstücke 85 und an den anderen parallelen Seiten zwei lange Zwischenstücke 85 vorzusehen, so daß sich nochmals eine andere Rechteckgrundform ergibt. Der Werkstückträger 4 kann somit aufgrund der vorbeschriebenen vorteilhaften Ausführungsformen je nach Bedarf und Anwendungsfall wahlweise in verschiedenen Größen hergestellt werden, wobei eine derartige Größenumstellung einfach und schnell durchzuführen ist. Entsprechend den unterschiedlichen Größen des Werkstückträgers 4 kann die Breite zwischen den Förderbändern 40 der Längsförderer 6 und Querförderer 8 verändert werden, so daß vielfältige Variationsmöglichkeiten für eine rationelle Produktion bzw. Montage unterschiedlicher Werkstücke 49 mit der modularen und flexibel zu gestaltenden Montageeinrichtung 1 erreicht werden kann.

In den FIG. 19, 26 und 27 sind zudem Stützstege 86 dargestellt, die der Versteifung des Werkstückträgers 4 dienen können und bevorzugt aus Kunststoff hergestellt sind. Damit die Stützstege 86 bei verschiedenen Werkstückträgergrößen verwendet werden können, sind die Stützstege 86 vorzugsweise in drei verschiedenen Längenausführungen vorgesehen. Der Stützsteg 86 weist an einem Ende einen zapfenförmigen Vorsprung 87 auf, der in eine Aussparung 88 eingreift, die im Schenkel 79 des Eckstücks 77 ausgebildet ist. Am anderen Ende des Stützstegs 86 ist ein Querbolzen 89 ausgebildet, der in die Bohrung 82 des Schenkels 78 formschlüssig eingreifen kann und am oberen Endbereich eine Umfangsnut 90 für einen der Befestigung dienenden Sprengring aufweist. Der Stützsteg 86 liegt unter der Tragplatte 74 des Werkstückträgers 4 und trägt wesentlich zur Versteifung des vergrößerten Rahmens 73 bei.

Die erfindungsgemäße Montageeinrichtung 1 stellt gemäß den vorstehenden Ausführungen ein modulares flexibles Montagesystem (MFMS) dar, mit dem manuelle und automatische Arbeitsplätze rationell eingerichtet werden können. Die verschiedenen Arbeitsplatzeinheiten 2 können aufgrund des modularen Aufbaus durch Aneinanderreihung und Verkettung einfach und schnell den jeweiligen Erfordernissen angepaßt und zur Erzielung eines logischen Produktions- und Montageflusses variabel zusammengestellt werden. Aufgrund des modularen Bausystems können Produktionsinvestitionen stufenweise durchgeführt werden, indem z.B. die Herstellung eines neuen Produktes auf einer Montageeinrichtung mit Handarbeitsplätzen begonnen werden kann, während parallel dazu automatische Arbeitsplatzeinheiten erprobt und nach erfolgter Optimierung in den Montagefluß integriert werden können. Durch die unkomplizierten Veränderungsmöglichkeiten der Förderbreite und der wahlweisen Verwendung verschieden großer Werkstückträger 4 können auch andere bzw. neue Produkte, die insbesondere hinsichtlich ihrer Größe stark von den bisher gefertigten Produkten abweichen, ohne wesentlichen Mehraufwand lediglich durch einige geringfügige Anpassungsverstellungen auf der Montageeinrichtung 1 produziert werden.

Stribel GmbH                                    1015 EP

Benzstraße

D-7443 Frickenhausen


Ansprüche


1. Montageeinrichtung (1) mit einem Transportsystem für auf Werkstückträgern (4) positionierbaren Werkstücken (49) zur Bearbeitung mittels Arbeitsgeräten (9,10,15,20), gekennzeichnet durch eigenständige, separate Förderer (6,8,45) aufnehmende Arbeitsplatzeinheiten (2), die zur wahlweisen Bearbeitung der Werkstücke (49) auf dem vorderen und/oder hinteren Längsförderer (6) vorgesehen sind und für die getrennten Antriebe (41) der Förderer (6,8,45) je einen Steuereinrichtungen beinhaltenden Schaltschrank (23) und zur Anreihung und Verkettung leicht kuppelbare Versorgungs- und Steuerleitungsverbindungen (29) aufweisen.


2. Montageeinrichtung nach vorstehendem Anspruch, dadurch gekennzeichnet, daß die Arbeitsplatzeinheit (2) ein aus miteinander lösbar verbundenen Hohlprofilstreben (24) gebildetes Grundgestell (22,22') und eine Tischplatte (7) aufweist, auf der die Förderer (6,8,45), die Arbeitsgeräte (9,10,15,20) und diesen zugeordnete Steuergehäuse (21) für die vordere und/oder rückwärtige Werkstückbearbeitung befestigbar sind, und daß der Schaltschrank (23) für die Förderer (6,8,45) an einer Seite des Grundgestells (22,22') unter der Ebene der Tischplatte (7) angeordnet ist.

3. Montageeinrichtung nach einem der vorstehenden Ansprüche, dadurch gekennzeichnet, daß in der Hohlprofilstrebe (24) des Grundgestells (22) der Arbeitsplatzeinheit (2) selbst oder in einer zusätzlich angebrachten gleichen Hohlprofilstrebe (24) eine Medium (Druckluft, Flüssigkeit) führende Versorgungsleitung (26) ausgebildet ist, an die die Versorgungsleitungsverbindung (29) und zu den Arbeitsgeräten (9,10,15,20) führende Abzweigleitungen ankuppelbar sind.

4. Montageeinrichtung nach einem der vorstehenden Ansprüche, dadurch gekennzeichnet, daß am Grundgestell (22) der Arbeitsplatzeinheit (2) eine Fußstütze (13) über vertikal und horizontal verschiebbar gelagerte Beschlagteile (30 bis 33) in der Ebene stufenlos verstellbar angeordnet ist.

5. Montageeinrichtung nach einem der vorstehenden Ansprüche, dadurch gekennzeichnet, daß am Grundgestell (22) der Arbeitsplatzeinheit (2) etwa in Höhe der Förderebene der Werkstückträger (4) vorgesehene Armauflagen (14) angeordnet sind.

6. Montageeinrichtung nach einem der vorstehenden Ansprüche, dadurch gekennzeichnet, daß die Tischplatte (7) der Arbeitsplatzeinheit (2) werkseitig vorgesehene Aufnahmen (34) zur wahlweisen Befestigung der Längs- und Querförderer (6,8,45), der Arbeitsgeräte (9,15,20) und der Steuergehäuse (21) aufweist.

7. Montageeinrichtung nach einem der vorstehenden Ansprüche, dadurch gekennzeichnet, daß die Befestigungsaufnahmen (34) in der Tischplatte (7) der Arbeitsplatzeinheit (2) als in Abständen (Rastermaß) angeordnete, vorzugsweise ein Innengewinde aufweisende Lochungen ausgebildet sind.

8. Montageeinrichtung nach einem der vorstehenden Ansprüche, dadurch gekennzeichnet, daß der Förderer (6,8,45) für den Werkstückträger (4) in der Breite, quer zur Transportrichtung, veränderbar ausgeführt ist.

9. Montageeinrichtung nach einem der vorstehenden Ansprüche, dadurch gekennzeichnet, daß der Förderer (6,8,45) zwei auf Abstand zueinander angeordnete parallele Förderbänder (40) aufweist, die auf zwei Triebscheiben (43) gelagert sind, von denen mindestens eine für die Breitenänderung (Abstandsänderung) auf einer Achse (42) verstellbar gelagert ist.

10. Montageeinrichtung nach einem der vorstehenden Ansprüche, dadurch gekennzeichnet, daß jeder Förderer (6,8,45) einen eigenen Antriebsmotor (41) für die Triebscheiben (43) der Förderbänder (40) aufweist, die an freilaufenden und vorzugsweise nachstellbaren Umlenkrollen (44) rückgeführt sind.

11. Montageeinrichtung nach einem der vorstehenden Ansprüche, dadurch gekennzeichnet, daß die beiden Förderbänder (40) des Förderers (6,8) auf je einer Gleitschiene (37) geführt sind, die einen das Förderband (40) am Außenrand (39) überragenden Führungssteg (38) für den Werkstückträger (4) aufweist.

12. Montageeinrichtung nach einem der vorstehenden Ansprüche, dadurch gekennzeichnet, daß die Förderbänder (40) des zwischen den beiden Förderbändern (40) des Längsförderers (6) positionierbaren Querförderteils (45) in der Höhe verstellbar sind.

13. Montageeinrichtung nach einem der vorstehenden Ansprüche, dadurch gekennzeichnet, daß zur wahlweisen Verlängerung und/oder Verbreiterung des rahmenförmigen Werkstückträgers (4) zwischen Schenkeln (78,79) winkelförmiger Eckstücke (77) Zwischenstücke (85) einsetzbar sind.

14. Montageeinrichtung nach einem der vorstehenden Ansprüche, dadurch gekennzeichnet, daß das Zwischenstück (85) des Werkstückträgers (4) einenends einen in eine Ausnehmung (81) des Schenkels (79) des Eckstücks (77) eingreifenden Zapfen (80) und anderenends eine Ausnehmung (81) aufweist, in die ein Zapfen (80) des Schenkels (78) des anderen Eckstücks (77) eingreift.

15. Montageeinrichtung nach einem der vorstehenden Ansprüche, dadurch gekennzeichnet, daß die Zwischenstücke (85) des Werkstückträgers (4) in verschiedenen Längen ausgebildet sind.

16. Montageeinrichtung nach einem der vorstehenden Ansprüche, dadurch gekennzeichent, daß unter einer in einer inneren Nut (76) des rahmenförmigen Werkstückträgers (4) gehaltenen Tragplatte (74) Stützstege (86) vorgesehen sind, die an den Schenkeln (78,79) der Eckstücke (77) festlegbar sind.

17. ·Montageeinrichtung nach einem der vorstehenden Ansprüche, dadurch gekennzeichnet, daß der Stützsteg (86) einenends mit einem Vorsprung (87) in eine Aussparung (88) des einen Schenkels (79) eingreift und anderenends mit einem in eine Bohrung (82) des anderen Schenkels (78) einsteckbaren und vorzugsweise über einen Sprengring gesicherten Querbolzen (89) befestigt ist.

6

18. Montageeinrichtung nach einem der vorstehenden Ansprüche, dadurch gekennzeichnet, daß die Stützstege (86) des Werkstückträgers (4) in verschiedenen Längen vorgesehen sind.

19. Montageeinrichtung nach einem der vorstehenden Ansprüche, dadurch gekennzeichnet, daß das Eckstück (77) des Werkstückträgers (4) einen bevorzugt als Bolzen ausgeführten Betätigungsteil (84) für einen Steuerschalter aufweist.

20. Montageeinrichtung nach einem der vorstehenden Ansprüche, dadurch gekennzeichnet, daß der Werkstückträger (4) für den Eingriff eines Zentrierstiftes (56) mindestens eine Zentrierbuchse (99) aufweist, die in die Bohrung (82) des Schenkels (78) des Eckstücks (77) einsetzbar ist und die Tragplatte (74) fixiert.

21. Montageeinrichtung nach einem der vorstehenden Ansprüche, dadurch gekennzeichnet, daß der Bedämpfungsteil (84) und die Zentrierbuchse (99) an den vier Eckstücken (77) des Werkstückträgers (4) vorgesehen sind.

22. Montageeinrichtung nach einem der vorstehenden Ansprüche, dadurch gekennzeichnet, daß die Arbeitsplatzeinheit (2) als Automatikstation ausgeführt ist und für das Arbeitsgerät (9,15,20) einen auf der Tischplatte (7) montierbaren Roboter (50) aufweist, der mit einem Greifer (51) von einem vorzugsweise als Schwingförderer ausgeführten Zuführmagazin (19) erfaßte Werkstückteile an das auf dem Werkstückträger (4) positionierte Werkstück (49) anträgt.

23. Montageeinrichtung nach einem der vorstehenden Ansprüche, dadurch gekennzeichnet, daß dem Förderer (6,8) mindestens ein bevorzugt im Bereich des Abstands (36) zwischen den beiden Förderbändern (40) vorgesehener Stopper (18) zugeordnet ist, der einen elektrisch, pneumatisch oder hydraulisch betätigbaren Anschlagteil (57) für den Werkstückträger (4) aufweist.

24. MOntageeinrichtung nach einem der vorstehenden Ansprüche, dadurch gekennzeichnet, daß im Bereich des Abstandes (36) zwischen den beiden Förderbändern (40) eine Hubvorrichtung (17) mit einem den Werkstückträger (4) über die Ebene der Förderbänder (4) anhebenden Hubteil (55) aufweist, der in angehobener Position über einen Verriegelungsbolzen (64) festlegbar ist.

25. Montageeinrichtung nach einem der vorstehenden Ansprüche, dadurch gekennzeichnet, daß der Verriegelungsbolzen (64) der Hubvorrichtung (17) in eine Querbohrung (65) einer den Hubteil (55) tragenden Hubstange (59) eingreift.

26. Montageeinrichtung nach einem der vorstehenden Ansprüche, dadurch gekennzeichnet, daß die Hubvorrichtung (17) zwei an gegenüberliegenden Seiten der Hubstange (59) angeordnete Führungssäulen (71) aufweist und daß zwei in Querbohrungen (65) der Führungssäulen (71) eingreifende Verriegelungsbolzen (68) vorgesehen sind, die an einer Verbindungsstrebe (72) befestigt sind.

27. Montageeinrichtung nach einem der vorstehenden Ansprüche, dadurch gekennzeichnet, daß der Verriegelungsbolzen (64) über einen direkt an diesem oder an der Verbindungsstrebe (72) angeordneten Verriegelungskolben (68) eines Verriegelungszylinders (69) hydraulisch oder pneumatisch betätigbar ist.

28. Montageeinrichtung nach einem der vorstehenden Ansprüche, dadurch gekennzeichnet, daß ein Endteil (66) des Verriegelungsbolzens (64) in einer sich in Längsrichtung der Hubstange (59) und/oder der Führungssäule (71) erstreckenden Führungsnut (67) gelagert ist.

29. Montageeinrichtung nach einem der vorstehenden Ansprüche, dadurch gekennzeichnet, daß die Hubstange (59) über einen hydraulisch oder pneumatisch beaufschlagbaren Hubkolben (60) betätigbar ist, der in einem in einem Gehäuse (54) der als kompakte Baueinheit ausgeführten Hubvorrichtung (17) ausge-

9

bildeten Hubzylinder (61) gelagert ist, der an der dem Hubteil (55) zugewandten Seite von einer Verschlußplatte (62) begrenzt ist, und daß der Hubteil (55) über einen Verbindungsteil (58) lösbar an der Hubstange (59) befestigt ist.

30. Montageeinrichtung nach einem der vorstehenden Ansprüche, dadurch gekennzeichnet, daß die Hubstange (59) und/oder die Führungssäule (71) einen den Hub begrenzenden Endanschlag (63) aufweist.

31. Montageeinrichtung nach einem der vorstehenden Ansprüche, dadurch gekennzeichnet, daß der Hubteil (55) der Hubvorrichtung (17) mindestens einen, vorzugsweise zwei in die Zentrierbuchsen (99) des Werkstückträgers (4) eingreifende Zentrierstifte (56) aufweist.

32. Montageeinrichtung nach einem der vorstehenden Ansprüche, dadurch gekennzeichnet, daß die Hubvorrichtung (17) für den Werkstückträger (4) einem mit Druck und/oder Rotation am Werkstück (49) angreifenden Arbeitsgerät, wie Presse (9,10,15), Stanze, Nietmaschine, Rolliermaschine, zugeordnet ist.

33. Montageeinrichtung nach einem der vorstehenden Ansprüche, dadurch gekennzeichnet, daß die Hubvorrichtung (17) für den Werkstückträger (4) auf der Tischplatte (7) einer über einen kraft-

10

schlüssigen Rahmen mit einem Oberteil der Presse
(9,10) verbundenen Arbeitsplatzeinheit (2) vorgesehen ist.

FIG. 1

0255027

FIG. 2

FIG. 3

FIG. 4

FIG. 6

FIG. 5

FIG. 7

0255027

FIG. 8

FIG. 9

FIG. 10

0255027

FIG. 11

FIG. 12

FIG. 13

FIG. 14

FIG. 15

0255027

0255027

## FIG. 16

## FIG. 17

## FIG. 18

FIG. 19

FIG. 20

FIG. 21

FIG. 22

FIG. 23

FIG. 24

FIG. 25

FIG. 26

FIG. 27

FIG. 28

4

57

6

56

56

40

18

55

70

54

7

0255027

FIG. 29

## FIG. 30

FIG. 31

FIG. 32